# EUROPEAN PATENT SPECIFICATION

(11) **EP 1 690 896 B1**
(45) Date of publication and mention of the grant of the patent: **08.06.2016**
(21) Application number: 05112828.8
(22) Date of filing: 22.12.2005
(51) Int. Cl.: C08K 5/01, C10L 1/197, C10L 1/198, C10L 10/14, C10L 10/16, C10M 145/00, C10L 1/14, C08L 23/08, C08L 71/02

(54) **ADDITIVES FOR OIL COMPOSITIONS**
ADDITIVE FÜR ÖLZUSAMMENSETZUNGEN
ADDITIFS POUR COMPOSITIONS D'HUILE

(30) Priority: 11.02.2005 EP 05250779
(43) Date of publication of application: 16.08.2006
(73) Proprietor: Infineum International Limited, Abingdon Oxfordshire OX13 6BB (GB)
(72) Inventor: Morton, Colin, Oxfordshire SN7 8NA (GB); Tack, Robert, Abingdon, Oxfordshire OX14 1XB (GB)
(74) Representative: Capaldi, Michael Joseph

(56) References cited:
- EP-A- 0 892 012
- EP-A- 1 116 781
- EP-A- 1 314 771
- WO-A-98/46701

## Description

This invention relates to additives for oil compositions, primarily to additives for fuel oil compositions, and more especially to additives for fuel oil compositions susceptible to wax formation at low temperatures.

Fuel oils, whether derived from petroleum or from vegetable sources, contain components, e.g., n- alkanes or methyl n-alkanoates, that at low temperature tend to precipitate as large, plate-like crystals or spherulites of wax in such a way as to form a gel structure which causes the fuel to lose its ability to flow. The lowest temperature at which the fuel will still flow is known as the pour point.

As the temperature of the fuel falls and approaches the pour point, difficulties arise in transporting the fuel through lines and pumps. Further, the wax crystals tend to plug fuel lines, screens, and filters at temperatures above the pour point. These problems are well recognised in the art, and various additives have been proposed, many of which are in commercial use, for depressing the pour point of fuel oils. Similarly, other additives have been proposed and are in commercial use for reducing the size and changing the shape of the wax crystals that do form. Smaller size crystals are desirable since they are less likely to clog a filter. The wax from a diesel fuel, which is primarily an alkane wax, crystallizes as platelets; certain additives inhibit this and cause the wax to adopt an acicular habit, the resulting needles being more likely to pass through a filter, or form a porous layer of crystals on the filter, than are platelets. The additives may also have the effect of retaining the wax crystals in suspension in the fuel, reducing settling and thus also assisting in prevention of blockages.

Effective wax crystal modification (as measured by cold filter plugging point (CFPP) and other operability tests, as well as simulated and field performance) may be achieved by ethylene-vinyl acetate (EVAC) or propionate copolymer-based flow improvers.

British Specification No. 1,086,036, EP-A-527,322 and EP-A-518,406 describe terpolymers suitable as lattices for coatings, these terpolymers being formed by copolymerizing ethylene with a vinyl ester of a tertiary or quaternary aliphatic carboxylic acid and a further ester monomer which may be vinyl acetate.

British Specification No. 1,314,855 describes terpolymers of ethylene, vinyl acetate and a vinyl ester of a long-chain carboxylic acid which may be a saturated carboxylic acid having 8 to 30 carbon atoms. These terpolymers are described as useful in lubricating oils as viscosity index improvers.

British Specification No. 1,244,512 describes terpolymers of ethylene, a vinyl ester of a C₂ to C₄ monocarboxylic acid and a small amount of an unsaturated ester having a C₁₀ to C₂₂ alkyl group, and preferably of the formula.

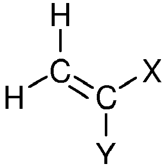

Wherein X is hydrogen or a methyl group, and Y is a OOCR or -COOR wherein R is preferably a C₁₀ to C₁₆ straight chain or branched chain alkyl group.

WO 96/07718 discloses oil soluble ethylene terpolymers containing ethylene units and different vinyl ester units, and their use as additives for improving the low temperature flow properties of fuel oil compositions. Polymer examples 1 to 4 are ethylene-vinyl acetate-vinyl 2-ethyl hexanoate terpolymers having various proportions of the two unsaturated esters, as well as differing number average molecular weights and branching characteristics.

The polymers of WO 96/07718 are effective low temperature flow improvers and have the advantage of being manufactured from commercially available vinyl ester monomers.

EP 0 061 895 describes polyoxyalkylene compounds such as polyoxyalkylene esters and ethers useful as flow improvers for distillate fuels. These may be used in combination with EVA polymers.

EP 1 007 606 describes the use of ethylene/vinyl ester copolymers and terpolymers as flow improvers for distillate fuel. These may be combined with polyoxyalkylene compounds such as those described in EP 0061 895. The ethylene vinyl ester copolymers of EP 1 007 606 have a maximum vinyl ester content of 18 mol%, a proportion of which is vinyl acetate.

WO 98/46701 A generally discloses the combination of certain esters and ether of alkoxylated alcohols (a) with a second 'cold flow improver' (b) which is different from (a). Of the different options for (b), WO 98/46701 A describes ethylene unsaturated ester copolymers. Most preferred of these types of copolymer are those where the vinyl ester content is 3 to 18 mol%.

Although the flow improvers described above are largely effective, the present applicants have found reduced effectiveness when they are used in certain types of fuel. In particular, the applicants have found that for use in fuels with sharp distillation tails and low final boiling points, a combination of an ethylene/vinyl ester polymer which has a high proportion of vinyl ester higher than vinyl acetate, with a polyoxyalkylene compound gives enhanced performance.

Thus in accordance with a first aspect, the present invention provides an additive composition comprising at least one polyoxyalkylene compound and at least one ethylene polymer, wherein the at least one ethylene polymer, in addition to units derived from ethylene, comprises units of the formula (I): 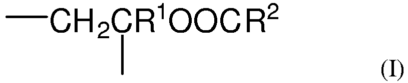 and optionally, units of the formula (II): 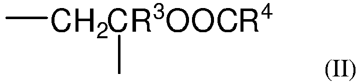 wherein each R¹ group independently represents hydrogen or methyl; wherein each R² group independently represents an alkyl group having 5 or more carbon atoms; wherein each R³ group independently represents hydrogen or methyl; wherein each R⁴ group independently represents an alkyl group having between 1 and 4 carbon atoms; wherein the proportion of units of formula (I) in the ethylene polymer is between 16 and 30mol%; and wherein the total proportion of units of formula (I) and formula (II) in the ethylene polymer is between 19 and 30mol%.

Preferably, the proportion of units of formula (I) in the ethylene polymer is between 18 and 30mol%, more preferably between 20 and 30 mol%, for example, between 22 and 28mol%.

Preferably, the total proportion of units of formula (I) and formula (II) in the ethylene polymer is between 20 and 30mol%, more preferably between 22 and 28mol%. For the avoidance of doubt, it will be clear that the present invention includes embodiments in which the ethylene polymer contains no units of formula (II). The proportion of units of formulae (I) and (II) in the ethylene polymer has been found to be important. Poorer performance has been found when the total proportion of units of formula (I) and formula (II) in the ethylene polymer is both above and below the preferred ranges. Too low a proportion of units of formula (I) has also been found to be detrimental.

Preferably, R² represents a branched chain alkyl group having 7 to 15 carbon atoms. Particularly preferred are units derived from such monomers as 2-ethylhexanoate, vinyl neodecanoate and tripropene (e.g. iso-nonyl).

Advantageously, R¹ and R³ are both hydrogen.

The polymer has at least two different repeat monomer units, i.e., is derivable from at least two different monomers. When units of formula (II) are included, the polymer has at least three different repeat monomer units. Also included are polymers derivable from four or more monomers. For example, the polymer may contain two or more different units of formulae (I) or (II), and/or may contain units of formula (III): 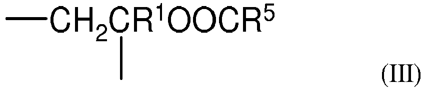 wherein R⁵ represents a hydrocarbyl group having 5 or more carbon atoms other than one as defined by R⁴.

As used in this specification the term "hydrocarbyl" refers to a group having a carbon atom directly attached to the rest of the molecule and having a hydrocarbon or predominantly hydrocarbon character. Among these, there may be mentioned hydrocarbon groups, including aliphatic, (e.g., alkyl), alicyclic (e.g., cycloalkyl), aromatic, aliphatic and alicyclic-substituted aromatic, and aromatic-substituted aliphatic and alicyclic groups. Aliphatic groups are advantageously saturated. These groups may contain non-hydrocarbon substituents provided their presence does not alter the predominantly hydrocarbon character of the group. Examples include keto, halo, nitro, cyano, alkoxy and acyl. If the hydrocarbyl group is substituted, a single (mono) substituent is preferred. Examples of substituted hydrocarbyl groups include 2-ketopropyl, ethoxyethyl, and propoxypropyl. The groups may also or alternatively contain atoms other than carbon in a chain or ring otherwise composed of carbon atoms. Suitable hetero atoms include, for example, nitrogen, sulphur, and, preferably, oxygen. Advantageously, the hydrocarbyl group contains at most 30, preferably at most 15, more preferably at most 10 and most preferably at most 8, carbon atoms.

The polymer may also contain units of formulae other than those mentioned above, for example units of the formula (IV)

-CH₂CHR⁶- (IV)

where R⁶ represents -OH, or of the formula (V)

-CCH₃(CH₂R⁷)CHR⁸- (V)

where R⁷ and R⁸ each independently represent hydrogen or an alkyl group with up to 4 carbon atoms, the units (V) advantageously being derived from isobutylene, 2-methylbut-2-ene or 2-methylpent-2-ene.

Preferably, the number average molecular weight (Mn) of the at least one ethylene polymer is in the range of 3000 to 8000, more preferably 4000 to 8000, most preferably 4000 to 7000. In this specification Mn refers to that value measured by GPC, in comparison to polystyrene strands.

Preferably, the degree of branching of the at least one ethylene polymer is in the range of 2 to 5, more preferably 2 to 4, such as 2 to 3.5, methyl groups per 100 methylene units. The degree of branching of the polymer is the number of methyl groups per 100 methylene units, as measured by NMR and corrected for the number of methyl and methylene groups in R² groups. Reference is made to Figure 1 of EP 1 007 606 and the description thereof for an example of a calculation of the degree of branching. Details of the conditions used for the NMR determination of the degree of branching of the ethylene polymer will be known to those skilled in the art. For example, the skilled man is aware that poorly resolved NMR spectra should be avoided and will choose appropriate conditions. Generally, NMR spectra obtained from high frequency NMR instruments will be preferred. A suitable NMR solvent will be chosen to ensure both good signal resolution and to minimise interference between signals from the solvent and signals from the polymer. The applicants have found that spectra obtained at ca. 40°C from NMR instruments running at 400Mhz or greater using a solvent of deuterated chloroform are suitable. Both ¹H NMR and ¹³C NMR experiments may be used if desired.

It is also within the scope of the invention to provide a composition comprising a mixture of two or more polymers according to the first aspect of the invention.

Preferably, the at least one polyoxyalkylene compound comprises a polyoxyalkylene ester, a polyoxyalkylene ether, a mixed polyoxyalkylene ester/ether or mixtures thereof.

Particularly preferred are polyoxyalkylene compounds containing at least one, preferably at least two, C₁₀ to C₃₀ linear alkyl groups and a polyoxyalkylene glycol group of molecular weight up to 5,000, preferably 200 to 5,000, the alkylene group in said polyoxyalkylene glycol containing from 1 to 4 carbon atoms. These materials form the subject of EP-A-0 061 895. Other such additives are described in US 4,491,455.

The preferred esters, ethers or ester/ethers are those of the general formula

R³¹-O-(D)-O-R³²

where R³¹ and R³² may be the same or different and represent
(a) n-alkyl-
(b) n-alkyl-CO-
(c) n-alkyl-O-CO(CH₂)ₓ- or
(d) n-alkyl-O-CO(CH₂)ₓ-CO-
x being, for example, 1 to 30, the alkyl group being linear and containing from 10 to 30 carbon atoms, and D representing the polyalkylene segment of the glycol in which the alkylene group has 1 to 4 carbon atoms, such as a polyoxymethylene, polyoxyethylene or polyoxytrimethylene moiety which is substantially linear; some degree of branching with lower alkyl side chains (such as in polyoxypropylene glycol) may be present but it is preferred that the glycol is substantially linear. D may also contain nitrogen.

Examples of suitable glycols are substantially linear polyethylene glycols (PEG) and polypropylene glycols (PPG) having a molecular weight of from 100 to 5,000, preferably from 200 to 2,000. Esters are preferred and fatty acids containing from 10-30 carbon atoms are useful for reacting with the glycols to form the ester additives, it being preferred to use a C₁₈ - C₂₄ fatty acid, especially behenic acid. The esters may also be prepared by esterifying polyethoxylated fatty acids or polyethoxylated alcohols.

Polyoxyalkylene diesters, diethers, ether/esters and mixtures thereof are suitable as additives, diesters being preferred for use in narrow boiling distillates, when minor amounts of monoethers and monoesters (which are often formed in the manufacturing process) may also be present. It is preferred that a major amount of the dialkyl compound be present. In particular, stearic or behenic diesters of polyethylene glycol, polypropylene glycol or polyethylene/polypropylene glycol mixtures are preferred.

Other examples of polyoxyalkylene compounds are those described in Japanese Patent Publication Nos. 2-51477 and 3-34790, and the esterified alkoxylated amines described in EP-A-117,108 and EP-A-326,356.

Preferably, the ratio of the amount of polyoxyalkylene compound to the amount of ethylene polymer in the additive composition is in the range from 1:99 to 99:1, more preferably in the range from 1:10 to 10:1, for example 1:2 or 1:1.

In a preferred embodiment the additive composition further comprises a comb polymer. This leads to a further improvement in cold flow performance as measured by CFPP.

Comb polymers are polymers in which branches containing hydrocarbyl groups are pendant from a polymer backbone, and are discussed in "Comb-Like Polymers. Structure and Properties", N. A. Plate and V. P. Shibaev, J. Poly. Sci. Macromolecular Revs., 8, p 117 to 253 (1974).

Generally, comb polymers have one or more long chain hydrocarbyl branches, e.g., oxyhydrocarbyl branches, normally having from 10 to 30 carbon atoms, pendant from a polymer backbone, said branches being bonded directly or indirectly to the backbone. Examples of indirect bonding include bonding via interposed atoms or groups, which bonding can include covalent and/or electrovalent bonding such as in a salt.

Advantageously, the comb polymer is a homopolymer or a copolymer having at least 25 and preferably at least 40, more preferably at least 50, molar per cent of the units of which have, side chains containing at least 6, and preferably at least 10, atoms.

As examples of preferred comb polymers there may be mentioned those of the general formula 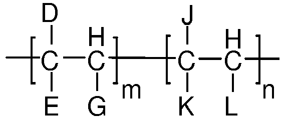 wherein
D = R¹¹, COOR¹¹, OCOR¹¹, R¹²COOR¹¹, or OR¹¹,
E = H, CH₃, D, or R¹²,
G=HorD
J = H, R¹², R¹²COOR¹¹, or an aryl or heterocyclic group,
K = H, COOR¹², OCOR¹², OR¹² or COOH,
L = H, R¹², COOR¹², OCOR¹², COOH, or aryl,
R¹¹ ≥ C₁₀ hydrocarbyl,
R¹² ≥ C₁ hydrocarbyl or hydrocarbylene,
and m and n represent mole fractions, m being finite and preferably within the range of from 1.0 to 0.4, n being less than 1 and preferably in the range of from 0 to 0.6. R¹¹ advantageously represents a hydrocarbyl group with from 10 to 30 carbon atoms, while R¹² advantageously represents a hydrocarbyl or hydrocarbylene group with from 1 to 30 carbon atoms.

The comb polymer may contain units derived from other monomers if desired or required.

These comb polymers may be copolymers of maleic anhydride or fumaric or itaconic acids and another ethylenically unsaturated monomer, e.g., an α-olefin, including styrene, or an unsaturated ester, for example, vinyl acetate or homopolymer of fumaric or itaconic acids. It is preferred but not essential that equimolar amounts of the comonomers be used although molar proportions in the range of 2 to 1 and 1 to 2 are suitable. Examples of olefins that may be copolymerized with e.g., maleic anhydride, include 1-decene, 1-dodecene, 1-tetradecene, 1-hexadecene, and 1-octadecene.

The acid or anhydride group of the comb polymer may be esterified by any suitable technique and although preferred it is not essential that the maleic anhydride or fumaric acid be at least 50% esterified. Examples of alcohols which may be used include n-decan-1-ol, n-dodecan-1-ol, n-tetradecan-1-ol, n-hexadecan-1-ol, and n-octadecan-1-ol. The alcohols may also include up to one methyl branch per chain, for example, 1-methylpentadecanl-ol or 2-methyltridecan-1-ol. The alcohol may be a mixture of normal and single methyl branched alcohols. It is preferred to use pure alcohols rather than the commercially available alcohol mixtures but if mixtures are used the R¹² refers to the average number of carbon atoms in the alkyl group; if alcohols that contain a branch at the 1 or 2 positions are used R¹² refers to the straight chain backbone segment of the alcohol.

These comb polymers may especially be fumarate or itaconate polymers and copolymers such for example as those described in EP-A-153176, EP-A-153177, EP-A-225688 and WO 91/16407.

Particularly preferred fumarate comb polymers are copolymers of alkyl fumarates and vinyl acetate, in which the alkyl groups have from 10 to 20 carbon atoms, more especially polymers in which the alkyl groups have 12 carbon atoms or in which the alkyl groups are a mixture of C₁₂/C₁₄ alkyl groups, made, for example, by solution copolymerizing an equimolar mixture of the fumarate ester and vinyl acetate. When the mixture is used it is advantageously a 1:1 by weight mixture of normal C₁₂ and C₁₄ alcohols. Furthermore, mixtures of the C₁₂ ester with the mixed C₁₂/C₁₄ ester may advantageously be used. In such mixtures, the ratio of C₁₂ to C₁₂/C₁₄ is advantageously in the range of from 1:1 to 4:1, preferably 2:1 to 7:2, and most preferably about 3:1, by weight. The particularly preferred comb polymers are those having a number average molecular weight, as measured by vapour phase osmometry, of 1,000 to 100,000, more especially 1,000 to 30,000.

Other suitable comb polymers are the polymers and copolymers of α-olefins and esterified copolymers of styrene and maleic anhydride, and esterified copolymers of styrene and fumaric acid; mixtures of two or more comb polymers may be used in accordance with the invention and, as indicated above, such use may be advantageous. other examples of comb polymers are hydrocarbon polymers, e.g., copolymers of ethylene and at least one α-olefin, the α-olefin preferably having at most 20 carbon atoms, examples being n-decene-1 and n-dodecene-1. Preferably, the number average molecular weight of such a copolymer is at least 30,000 measured by GPC. The hydrocarbon copolymers may be prepared by methods known in the art, for example using a Ziegler type catalyst.

Preferably, the ratio of the amount of comb polymer to the amount of ethylene polymer in the additive composition is in the range from 1:99 to 99:1, more preferably in the range from 1:10 to 10:1, for example 1:1.

Preferably, the ratio of the amount of comb polymer to the amount of polyoxyalkylene compound in the additive composition is in the range from 1:99 to 99:1, more preferably in the range from 1:10 to 10:1, for example 1:1.

In accordance with a second aspect, the present invention provides an additive concentrate composition comprising the additive composition of the first aspect and a mutually compatible solvent therefor.

In accordance with a third aspect, the present invention provides an oil composition comprising an oil and a minor amount of the composition of the first or second aspect.

In accordance with a fourth aspect, the present invention provides the use of the composition of the first or second aspects to improve the low temperature properties of an oil.

In accordance with a fifth aspect, the present invention provides a method for improving the low temperature properties of an oil, the method comprising the addition of the composition of the first or second aspects to the oil.

A further advantageous feature of the additive compositions of the present invention is their effect on the pour point of a fuel oil. The polyoxyalkylene compounds generally have little if any effect on the pour point of fuel oils when used alone. The ethylene polymers defined in relation to the first aspect of the invention are capable of reducing significantly the pour point of a fuel oil when used alone, however, it has been observed that the combination of the two species leads to particularly good pour point reduction. Thus the compositions defined in relation to the first aspect of the invention are effective for the simultaneous reduction in both measured CFPP and pour point. The addition of a comb polymer provides the increase in CFPP performance described above, whilst maintaining the benefit of good pour point reduction.

Preferably, the oil is a fuel oil, e.g., a petroleum-based fuel oil, especially a middle distillate fuel oil. Such distillate fuel oils generally boil within the range of from 110°C to 500°C, e.g. 150°C to 400°C. The fuel oil may comprise atmospheric distillate or vacuum distillate, cracked gas oil, or a blend in any proportion of straight run and thermally and/or catalytically cracked distillates. The most common petroleum distillate fuels are kerosene, jet fuels, diesel fuels, heating oils and heavy fuel oils. The heating oil may be a straight atmospheric distillate, or it may contain minor amounts, e.g. up to 35 wt %, of vacuum gas oil or cracked gas oil or of both. The above-mentioned low temperature flow problem is most usually encountered with diesel fuels and with heating oils. The invention is also applicable to vegetable-based fuel oils, for example rape seed oil methyl ester (RME), used alone or in admixture with a petroleum distillate oil.

Other examples of fuel oils include Fischer-Tropsch fuels. Fischer-Tropsch fuels, also known as FT fuels, include those described as gas-to-liquid (GTL) fuels and coal conversion fuels. To make such fuels, syngas (CO + H₂) is first generated and then converted to normal paraffins by a Fischer-Tropsch process. The normal paraffins may then be modified by processes such as catalytic cracking/reforming or isomerisation, hydrocracking and hydroisomerisation to yield a variety of hydrocarbons such as isoparaffins, cyclo-paraffins and aromatic compounds. The resulting FT fuel can be used as such or in combination with other fuel components and fuel types such as those mentioned in this specification.

Preferably, the fuel oil has a sulphur content of at most 0.2% by weight, especially of at most 0.05% by weight. Fuels with even lower levels of sulphur are also suitable such as, fuels with less than 50ppm sulphur by weight, preferably less than 20 ppm, for example 10ppm or less.

The additives of the present invention are particularly suitable for use in fuels with sharp distillation tails and low final boiling points (FBP). Such fuels may be characterised as having a FBP-90% distillation of 30°C or less, for example between 25 and 20°C, and an FBP of 370°C or less, for example less than 360°C. FBP-90% distillation refers to the difference between the FBP and the temperature at which 90% of the volume of the fuel has distilled. Illustrative of these types of fuel are Northern European heating oils and Japanese, narrow cut, ultra low sulphur diesel fuels.

Alternatively, the oil may be a lubricating oil, which may be an animal, vegetable or mineral oil, such as, for example, petroleum oil fractions ranging from naphthas or spindle oil to SAE 30, 40 or 50 lubricating oil grades, castor oil, fish oils or oxidized mineral oil. Such an oil may contain additives depending on its intended use; examples are viscosity index improvers such as ethylene-propylene copolymers, succinic acid based dispersants, metal containing dispersant additives and zinc dialkyldithiophosphate antiwear additives.

The additive composition may also comprise additional cold flow improvers.

Other additives for improving low temperature properties include polar nitrogen compounds. Such compounds are oil-soluble polar nitrogen compounds carrying one or more, preferably two or more, substituents of the formula >NR¹³, where R represents a hydrocarbyl group containing 8 to 40 atoms, which substituent or one or more of which substituents may be in the form of a cation derived therefrom. The oil soluble polar nitrogen compound is generally one capable of acting as a wax crystal growth inhibitor in fuels. it comprises for example one or more of the following compounds:
An amine salt and/or amide formed by reacting at least one molar proportion of a hydrocarbyl-substituted amine with a molar proportion of a hydrocarbyl acid having from 1 to 4 carboxylic acid groups or its anhydride, the substituent(s) of formula >NR¹³ being of the formula -NR¹³R¹⁴ where R¹³ is defined as above and R¹⁴ represents hydrogen or R¹⁴, provided that R¹³ and R¹⁴ may be the same or different, said substituents constituting part of the amine salt and/or amide groups of the compound.

Ester/amides may be used, containing 30 to 300, preferably 50 to 150, total carbon atoms. These nitrogen compounds are described in US 4,211,534. Suitable amines are predominantly C₁₂ to C₄₀ primary, secondary, tertiary or quaternary amines or mixtures thereof but shorter chain amines may be used provided the resulting nitrogen compound is oil soluble, normally containing about 30 to 300 total carbon atoms. The nitrogen compound preferably contains at least one straight chain C₈ to C₄₀, preferably C₁₄ to C₂₄, alkyl segment.

Suitable amines include primary, secondary, tertiary or quaternary, but are preferably secondary. Tertiary and quaternary amines only form amine salts. Examples of amines include tetradecylamine, cocoamine, and hydrogenated tallow amine. Examples of secondary amines include dioctacedyl amine and methylbehenyl amine. Amine mixtures are also suitable such as those derived from natural materials. A preferred amine is a secondary hydrogenated tallow amine, the alkyl groups of which are derived from hydrogenated tallow fat composed of approximately 4% C₁₄, 31% C₁₆, and 59% C₁₈.

Examples of suitable carboxylic acids and their anhydrides for preparing the nitrogen compounds include ethylenediamine tetraacetic acid, and carboxylic acids based on cyclic skeletons, e.g., cyclohexane-1,2-dicarboxylic acid, cyclohexene-1,2-dicarboxylic acid, cyclopentane-1,2-dicarboxylic acid and naphthalene dicarboxylic acid, and 1,4-dicarboxylic acids including dialkyl spirobislactones. Generally, these acids have about 5 to 13 carbon atoms in the cyclic moiety. Preferred acids useful in the present invention are benzene dicarboxylic acids e.g., phthalic acid, isophthalic acid, and terephthalic acid. Phthalic acid and its anhydride are particularly preferred. The particularly preferred compound is the amide-amine salt formed by reacting 1 molar portion of phthalic anhydride with 2 molar portions of dihydrogenated tallow amine. Another preferred compound is the diamide formed by dehydrating this amide-amine salt.

Other examples are long chain alkyl or alkylene substituted dicarboxylic acid derivatives such as amine salts of monoamides of substituted succinic acids, examples of which are known in the art and described in US 4,147,520, for example. Suitable amines may be those described above.

Other examples are condensates, for example, those described in EP-A-327423.

Further additives for improving low temperature properties are compounds containing a cyclic ring system carrying at least two substituents of the general formula below on the ring system

-A-N R¹⁵R¹⁶

where A is a linear or branched chain aliphatic hydrocarbylene group optionally interrupted by one or more hetero atoms, and R¹⁵ and R¹⁶ are the same or different and each is independently a hydrocarbyl group containing 9 to 40 atoms optionally interrupted by one or more hetero atoms, the substituents being the same or different and the compound optionally being in the form of a salt thereof. Advantageously, A has from 1 to 20 carbon atoms and is preferably a methylene or polymethylene group. Such compounds are described in WO 93/04148.

Also suitable are hydrocarbon polymers. Examples are those of the general formula: 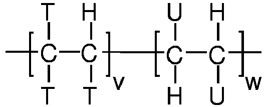 wherein
T = H or R²¹ wherein
R²¹ = C₁ to C₄₀ hydrocarbyl, and
U = H, T, or aryl
and v and w represent mole fractions, v being within the range of from 1.0 to 0.0, w being in the range of from 0.0 to 1.0.

The hydrocarbon polymers may be made directly from monoethylenically unsaturated monomers or indirectly by hydrogenating polymers from polyunsaturated monomers, e.g., isoprene and butadiene.

Examples of hydrocarbon polymers are disclosed in WO 91/11488.

Preferred copolymers are ethylene α-olefin copolymers, having a number average molecular weight of at least 30,000. Preferably the α-olefin has at most 28 carbon atoms. Examples of such olefins are propylene, butene, isobutene, n-octene-1, isooctene-1, n-decene-1, and n-dodecene-1. The copolymer may also comprise small amounts, e.g., up to 10% by weight, of other copolymerizable monomers, for example olefins other than α-olefins, and non-conjugated dienes. The preferred copolymer is an ethylene-propylene copolymer.

The number average molecular weight of the ethylene α-olefin copolymer is, as indicated above, preferably at least 30,000, as measured by gel permeation chromatography (GPC) relative to polystyrene standards, advantageously at least 60,000 and preferably at least 80,000. Functionally no upper limit arises but difficulties of mixing result from increased viscosity at molecular weights above about 150,000, and preferred molecular weight ranges are from 60,000 and 80,000 to 120,000.

Advantageously, the copolymer has a molar ethylene content between 50 and 85 per cent. More advantageously, the ethylene content is within the range of from 57 to 80%, and preferably it is in the range from 58 to 73%; more preferably from 62 to 71%, and most preferably 65 to 70%.

Preferred ethylene α-olefin copolymers are ethylene-propylene copolymers with a molar ethylene content of from 62 to 71 % and a number average molecular weight in the range 60,000 to 120,000; especially preferred copolymers are ethylene-propylene copolymers with an ethylene content of from 62 to 71 % and a molecular weight from 80,000 to 100,000.

The copolymers may be prepared by any of the methods known in the art, for example using a Ziegler type catalyst. The polymers should be substantially amorphous, since highly crystalline polymers are relatively insoluble in fuel oil at low temperatures.

Other suitable hydrocarbon polymers include a low molecular weight ethylene-α-olefin copolymer, preferably with a number average molecular weight of at most 7,500, more preferably from 1,000 to 6,000, such as from 2,000 to 5,000, as measured by vapour phase osmometry. Appropriate α-olefins are as given above, or styrene, with propylene again being preferred. Advantageously the ethylene content is from 60 to 77 molar per cent, although for ethylene-propylene copolymers up to 86 molar per cent by weight ethylene may be employed with advantage.

The hydrocarbon polymer may most preferably be an oil-soluble hydrogenated block diene polymer, comprising at least one crystallizable block, obtainable by end-to-end polymerization of a linear diene, and at least one non-crystallizable block, the non-crystallizable block being obtainable by 1,2-configuration polymerization of a linear diene, by polymerization of a branched diene, or by a mixture of such polymerizations.

Advantageously, the block copolymer before hydrogenation comprises units derived from butadiene only, or from butadiene and at least one comonomer of the formula

CH₂=CR²²-CR²³=CH₂

wherein R²² represents a C₁ to C₈ alkyl group and R²³ represents hydrogen or a C₁ to C₈ alkyl group. Advantageously the total number of carbon atoms in the comonomer is 5 to 8, and the comonomer is advantageously isoprene. Advantageously, the copolymer contains at least 10% by weight of units derived from butadiene.

In general, the crystallizable block or blocks will be the hydrogenation product of the unit resulting from predominantly 1,4- or end-to-end polymerization of butadiene, while the non-crystallizable block or blocks will be the hydrogenation product of the unit resulting from 1,2-polymerization of butadiene or from 1,4-polymerization of an alkyl-substituted butadiene.

### Additive Concentrate (second aspect of the invention)

Additive concentrates according to the invention advantageously contain between 3 and 75%, preferably between 10 and 65%, of the additive composition in an oil or a solvent miscible with oil.

A concentrate comprising the additive in admixture with a suitable solvent is convenient as a means for incorporating the additive into bulk oil such as distillate fuel, which incorporation may be done by methods known in the art. The concentrates may also contain the other additives as required and preferably contain from 3 to 75 wt %, more preferably 3 to 60 wt %, most preferably 10 to 50 wt % of the additives preferably soluble in oil. Examples of solvent are organic solvents including hydrocarbon solvents, for example petroleum fractions such as naphtha, kerosene, diesel and heater oil; aromatic hydrocarbons such as aromatic fractions, e.g. those sold under the 'SOLVESSO' tradename; alcohols and/or esters; and paraffinic hydrocarbons such as hexane and pentane and isoparaffins. The solvent must, of course, be selected having regard to its compatibility with the additive and with the oil.

### Oil Composition (third aspect of the invention)

The oil composition of the invention advantageously contains an additive composition of the invention in a proportion of 0.0005% to 1%, advantageously 0.001 to 0.1%, and preferably 0.01 to 0.06% by weight, based on the weight of oil.

The invention will now be described by way of example only.

### CFPP performance

A sample of a heating oil with a final boiling point of 355 °C and a FBP-90% distillation of 14°C, was treated solely with 200ppm of a polyoxyalkylene compound (polyethylene glycol dibehanate, molecular weight ca. 600 (PEG600)). This reduced the CFPP of the fuel to -7.5°C, (compared to -2.5°C for the base fuel). No further improvement could be achieved using the polyoxyalkylene compound alone.

The same oil treated solely with 400 ppm of an ethylene polymer containing 18.6mol% of units of formula (I), the units comprising vinyl 2-ethylhexanoate, gave a CFPP of -7.0°C. The combination of this ethylene polymer with the polyoxyalkylene compound described above led to a worsening of CFPP performance to -6.0°C.

The same oil treated solely with 400 ppm of an ethylene polymer containing 27.4mol% of units of formula (I), the units comprising vinyl 2-ethylhexanoate, gave a CFPP of -3.0°C. However, in this case, the addition of the polyoxyalkylene compound described above led to a significant further decrease in CFPP to -10.5°C. This example illustrates the effectiveness of an additive composition according to the invention, i.e. the combination of a polyoxyalkylene compound with an ethylene polymer having a high proportion of vinyl ester higher than vinyl acetate.

Further results are shown in Table 1 below.

**Table 1**

| Composition | Units of formula (I) / mol% | Units of formula (II) / mol% | Total amount of (I) + (II) / mol% | CFPP / °C | CFPP / °C + comb polymer |
|---|---|---|---|---|---|
| A | 19.79 | 5.91 | 25.70 | -11.00 | -13.50 |
| B | 27.40 | 0.00 | 27.40 | -10.50 | -11.50 |
| C | 22.60 | 6.10 | 28.70 | -10.00 | -14.00 |
| D | 18.30 | 9.25 | 27.55 | -9.75 | -13.40 |
| E | 18.20 | 5.80 | 24.00 | -9.00 | -13.00 |
| F | 18.80 | 4.90 | 23.70 | -9.00 | -12.50 |
| G | 18.61 | 2.73 | 21.34 | -9.00 | -14.50 |
| H | 18.91 | 6.21 | 25.11 | -8.75 | -12.30 |
| I | 16.16 | 3.98 | 20.15 | -8.00 | -13.00 |
| J | 17.98 | 2.55 | 20.53 | -7.75 | -14.00 |
| K | 20.79 | 0.00 | 20.79 | -7.50 | -13.80 |
| Comp. 1 | 24.36 | 6.91 | 31.27 | -5.50 | -8.50 |
| Comp. 2 | 14.44 | 5.38 | 19.82 | -4.00 | -9.30 |

Compositions A-K comprised 200 ppm of polyethylene glycol dibehanate (molecular weight ca. 600 (PEG600)), and 400 ppm of an ethylene polymer with the proportions of units of formulae (I) and (II) listed in the Table 1. The final column of Table 1 shows results for compositions A-K with the addition of 200 ppm of a comb polymer C₁₂/C₁₄ mixed alkyl fumarate/vinyl acetate copolymer). In these three component compositions, 200 ppm of each species was used. These results show good CFPP performance, demonstrating further enhancement by the comb polymer.

Poorer performance was observed for the two comparative examples. Examples Comp. 1 has a high total amount of units of formulae (I) and (II) and Comp. 2 has a proportion of units of formula (I) lower than required in the present invention. These data show the importance of the relative and total amounts of units of formulae (I) and (II).

### Effect of additive compositions on pour point.

Table 2 below details results of experiments to determine the pour point of a fuel. The fuel used was the same as that used for the CFPP tests described above and had a pour point of -3°C absent any additive.

**Table 2**

| Comb polymer / ppm | PEG600 / ppm | Ethylene polymer /ppm | Pour point / °C |
|---|---|---|---|
| | 200 | | -3 |
| | 300 | | -3 |
| | 400 | | -3 |
| 150 | | | -12 |
| | 150 | | -3 |
| | | 150 | -45 |
| 150 | 150 | | -15 |
| | 150 | 150 | -60 |
| 150 | 150 | 150 | -51 |
| 300 | 150 | | -15 |
| | 150 | 300 | -63 |
| 200 | 200 | 200 | -57 |
| | 200 | 400 | -60 |

As is clear from the results in Table 2, PEG600 alone is ineffective at reducing the pour point of the fuel. Addition of the ethylene polymer alone (that used in composition H from Table 1) reduced the pour point to -45°C. This is further improved by the combination of PEG600 and the ethylene polymer. The combination of all three components also gave good pour point reduction. By comparison, both the comb polymer alone (C₁₂/C₁₄ mixed alkyl fumarate/vinyl acetate copolymer), and the combination of the comb polymer with the PEG600 were less effective.

## Claims

1. An additive composition comprising at least one polyoxyalkylene compound and at least one ethylene polymer, wherein the at least one ethylene polymer, in addition to units derived from ethylene, comprises units of the formula (I): 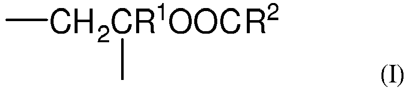 and optionally, units of the formula (II): 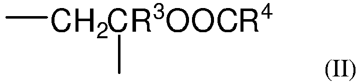 wherein each R¹ group independently represents hydrogen or methyl; wherein each R² group independently represents an alkyl group having 5 or more carbon atoms; wherein each R³ group independently represents hydrogen or methyl; wherein each R⁴ group independently represents an alkyl group having between 1 and 4 carbon atoms; wherein the proportion of units of formula (I) in the ethylene polymer is between 16 and 30mol%; and wherein the total proportion of units of formula (I) and formula (II) in the ethylene polymer is between 19 and 30mol%.

2. An additive composition according to claim 1, wherein R² represents a branched chain alkyl group having 7 to 15 carbon atoms.

3. An additive composition according to claim 1 or claim 2, wherein R⁴ represents ethyl or methyl.

4. An additive composition according to any preceding claim, wherein the at least one polyoxyalkylene compound comprises a polyoxyalkylene ester, a polyoxyalkylene ether, a mixed polyoxyalkylene ester/ether or mixtures thereof.

5. An additive composition according to claim 4, wherein the at least one polyoxyalkylene compound contains at least one, preferably at least two, C₁₀ to C₃₀ linear alkyl groups and a polyoxyalkylene glycol group of molecular weight up to 5,000, preferably 200 to 5,000, the alkyl group in said polyoxyalkylene glycol containing from 1 to 4 carbon atoms.

6. An additive composition according to any preceding claim further comprising at least one comb polymer.

7. An additive composition according to claim 6, wherein the at least one comb polymer comprises a copolymer of at least one alkyl fumarate in which the alkyl groups have from 10 to 20 carbon atoms, and vinyl acetate, especially in which the alkyl groups have 12 carbon atoms or in which the alkyl groups comprise a mixture of C₁₂/C₁₄ alkyl groups.

8. An additive concentrate composition comprising the additive composition according to any preceding claim and a mutually compatible solvent therefor.

9. An oil composition comprising an oil and a minor amount of an additive composition according to any of claims 1 to 7, or an additive concentrate composition according to claim 8.

10. The use of an additive composition according to any of claims 1 to 7, or of an additive concentrate composition according to claim 8 to improve the low temperature properties of an oil.

11. The use according to claim 10, wherein the oil comprises a fuel oil having a FBP-90% distillation of 30°C or less and an FBP of 370°C or less.

12. A method for improving the low temperature properties of an oil, the method comprising the addition of an additive composition according to any of claims 1 to 7, or the addition of an additive concentrate composition according to claim 8, to the oil.

13. A method according to claim 12, wherein the oil comprises a fuel oil having a FBP-90% distillation of 30°C or less and an FBP of 370°C or less.

## Patentansprüche

1. Additivzusammensetzung, die mindestens eine Polyoxyalkylenverbindung und mindestens ein Ethylenpolymer umfasst, wobei das mindestens eine Ethylenpolymer zusätzlich Einheiten, die von Ethylen abgeleitet sind, Einheiten der Formel (I): 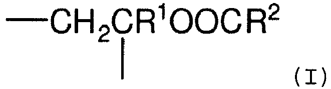 und wahlweise Einheiten der Formel (II): 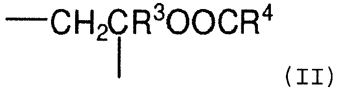 umfasst,
wobei jede Gruppe R¹ unabhängig Wasserstoff oder Methyl wiedergibt, wobei jede Gruppe R² unabhängig eine Alkylgruppe wiedergibt, die 5 oder mehr Kohlenstoffatome aufweist, wobei jede Gruppe R³ unabhängig Wasserstoff oder Methyl wiedergibt, wobei jede Gruppe R⁴ unabhängig eine Alkylgruppe wiedergibt, die zwischen 1 und 4 Kohlenstoffatome aufweist, wobei der Anteil von Einheiten der Formel (I) in dem Ethylenpolymer zwischen 16 und 30 Mol-% beträgt und wobei der Gesamtanteil von Einheiten der Formel (I) und der Formel (II) in dem Ethylenpolymer zwischen 19 und 30 Mol-% beträgt.

2. Additivzusammensetzung nach Anspruch 1, bei der R² eine verzweigtkettige Alkylgruppe wiedergibt, die von 7 bis 15 Kohlenstoffatome aufweist.

3. Additivzusammensetzung nach Anspruch 1 oder Anspruch 2, bei der R⁴ Ethyl oder Methyl wiedergibt.

4. Additivzusammensetzung nach einem der vorhergehenden Ansprüche, bei der die mindestens eine Polyoxyalkylenverbindung Polyoxyalkylenester, Polyoxyalkylenether, gemischte Polyoxyalkylenester/ether oder Mischungen davon umfasst.

5. Additivzusammensetzung nach Anspruch 4, bei der die mindestens eine Polyoxyalkylenverbindung mindestens eine, vorzugsweise mindestens zwei, lineare C₁₀- bis C₃₀-Alkylgruppen und Polyoxyalkylenglycolgruppe mit Molekulargewicht bis 5.000, vorzugsweise 200 bis 5.000, enthält, wobei die Alkylgruppe des Polyoxyalkylenglycols von 1 bis 4 Kohlenstoffatome enthält.

6. Additivzusammensetzung nach einem der vorhergehenden Ansprüche, die mindestens ein Kammpolymer umfasst.

7. Additivzusammensetzung nach Anspruch 6, bei der das mindestens eine Kammpolymer ein Copolymer von mindestens einem Alkylfumarat, bei dem die Alkylgruppen von 10 bis 20 Kohlenstoffatome aufweisen, und Vinylacetat umfasst, bei dem insbesondere die Alkylgruppen 12 Kohlenstoffatome aufweisen oder die Alkylgruppen eine Mischung von C₁₂-/C₁₄-Alkylgruppen umfassen.

8. Additivkonzentratzusammensetzung, die die Additivzusammensetzung gemäß einem der vorhergehenden Ansprüche und damit gegenseitig verträgliches Lösungsmittel umfasst.

9. Ölzusammensetzung, die Öl und in kleinerer Menge Additivzusammensetzung gemäß einem der Ansprüche 1 bis 7 oder Additivkonzentratzusammensetzung gemäß Anspruch 8 umfasst.

10. Verwendung von Additivzusammensetzung gemäß einem der Ansprüche 1 bis 7 oder von Additivkonzentratzusammensetzung gemäß Anspruch 8 zur Verbesserung der Tieftemperatureigenschaften von Öl.

11. Verwendung nach Anspruch 10, bei der das Öl Brennstofföl umfasst, das eine Differenz zwischen Endsiedepunkt und der Temperatur, bei der 90 Vol.-% destilliert worden sind, von 30 °C oder weniger, und einen Endsiedepunkt von 370 °C oder weniger aufweist.

12. Verfahren zur Verbesserung der Tieftemperatureigenschaften von Öl, bei welchem Verfahren Additivzusammensetzung gemäß einem der Ansprüche 1 bis 7 oder Additivkonzentratzusammensetzung gemäß Anspruch 8 zu dem Öl hinzugefügt wird.

13. Verfahren nach Anspruch 12, bei dem das Öl Brennstofföl umfasst, das eine Differenz zwischen Endsiedepunkt und der Temperatur, bei der 90 Vol.-% destilliert worden sind, von 30 °C oder weniger, und einen Endsiedepunkt von 370 °C oder weniger aufweist.

## Revendications

1. Composition d'additifs comprenant au moins un composé de polyoxyalkylène et au moins un polymère d'éthylène, dans laquelle ledit au moins un polymère d'éthylène, en plus de motifs dérivés de l'éthylène, comprend des motifs de formule (I) : 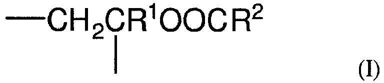 et, facultativement, des motifs de formule (II) : 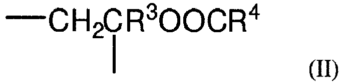 où chaque groupe R¹ représente indépendamment un atome d'hydrogène ou un groupe méthyle ; où chaque groupe R² représente indépendamment un groupe alkyle ayant 5 ou plus de 5 atomes de carbone ; où chaque groupe R³ représente indépendamment un atome d'hydrogène ou un groupe méthyle ; où chaque groupe R⁴ représente indépendamment un groupe alkyle ayant 1 à 4 atomes de carbone ; où la proportion de motifs de formule (I) dans le polymère d'éthylène est comprise entre 16 et 30 % en moles ; et où la proportion totale de motifs de formule (I) et de formule (II) dans le polymère d'éthylène est comprise entre 19 et 30 % en moles.

2. Composition d'additifs suivant la revendication 1, dans laquelle R² représente un groupe alkyle à chaîne ramifiée ayant 7 à 15 atomes de carbone.

3. Composition d'additifs suivant la revendication 1 ou la revendication 2, dans laquelle R⁴ représente un groupe éthyle ou méthyle.

4. Composition d'additifs suivant l'une quelconque des revendications précédentes, dans laquelle ledit au moins un composé de polyoxyalkylène comprend un ester de polyoxyalkylène, un éther de polyoxyalkylène, un ester/éther de polyoxyalkylène mixte ou leurs mélanges.

5. Composition d'additifs suivant la revendication 4, dans laquelle ledit au moins un composé de polyoxyalkylène contient au moins un, de préférence au moins deux, groupes alkyle linéaires en C₁₀ à C₃₀ et un groupe polyoxyalkylèneglycol d'un poids moléculaire allant jusqu'à 5000, de préférence de 200 à 5000, le groupe alkyle dans ledit polyoxyalkylèneglycol contenant 1 à 4 atomes de carbone.

6. Composition d'additifs suivant l'une quelconque des revendications précédentes, comprenant en outre au moins un polymère en peigne.

7. Composition d'additifs suivant la revendication 6, dans laquelle ledit au moins un polymère en peigne comprend un copolymère d'au moins un fumarate d'alkyle dans lequel les groupes alkyle ont 10 à 20 atomes de carbone, et d'acétate de vinyle, notamment dans lequel les groupes alkyle ont 12 atomes de carbone ou dans lequel les groupes alkyle comprennent un mélange de groupes alkyle en C₁₂/C₁₄.

8. Composition de concentré d'additifs comprenant la composition d'additifs suivant l'une quelconque des revendications précédentes et un solvant mutuellement compatible à cette fin.

9. Composition d'huile comprenant une huile et une petite quantité d'une composition d'additifs suivant l'une quelconque des revendications 1 à 7, ou d'une composition de concentré d'additifs suivant la revendication 8.

10. Utilisation d'une composition d'additifs suivant l'une quelconque des revendications 1 à 7, ou d'une composition de concentré d'additifs suivant la revendication 8 pour améliorer les propriétés à basse température d'une huile.

11. Utilisation suivant la revendication 10, dans laquelle l'huile comprend un fuel-oil ayant une valeur de FBP-distillation à 90 % égale ou inférieure à 30°C et un FBP égal ou inférieur à 370°C.

12. Procédé pour améliorer les propriétés à basse température d'une huile, le procédé comprenant l'addition d'une composition d'additifs suivant l'une quelconque des revendications 1 à 7, ou d'une composition de concentré d'additifs suivant la revendication 8, à l'huile.

13. Procédé suivant la revendication 12, dans lequel l'huile comprend un fuel-oil ayant une valeur de FBP-distillation à 90 % égale ou inférieure à 30°C et un FBP égal ou inférieur à 370°C.
